# EUROPÄISCHE PATENTSCHRIFT

(11) **EP 2 094 962 B1**
(45) Veröffentlichungstag und Bekanntmachung des Hinweises auf die Patenterteilung: **15.05.2013**
(21) Anmeldenummer: 08707465.4
(22) Anmeldetag: 31.01.2008
(51) Int. Cl.: F02G 5/02, F01K 23/06

(54) **ANTRIEBSSTRANG MIT EINER FLUID- ODER DAMPFGETRIEBENEN EXPANSIONSMASCHINE**
DRIVE TRAIN COMPRISING AN EXPANDER DRIVEN BY FLUID OR STEAM
CHAÎNE CINÉMATIQUE POURVUE D'UNE MACHINE À EXPANSION À FLUIDE OU À VAPEUR

(30) Priorität: 05.02.2007 DE 102007006420
(43) Veröffentlichungstag der Anmeldung: 02.09.2009
(60) Teilanmeldung: 10000669.1
(73) Patentinhaber: Voith Patent GmbH, 89522 Heidenheim (DE)
(72) Erfinder: BARTOSCH, Stephan, 89192 Rammingen (DE); BERGER, Jürgen, 89547 Gerstetten (DE)
(74) Vertreter: Schmidt, Sven Hendrik
(86) Internationale Anmeldenummer: PCT/EP2008/000778
(87) Internationale Veröffentlichungsnummer: WO 2008/095642

(56) Entgegenhaltungen:
- WO-A-85/02228
- DE-A1- 3 148 208
- DE-A1- 3 245 351
- GB-A- 644 759
- GB-A- 2 080 432

## Beschreibung

Die vorliegende Erfindung betrifft einen Antriebsstrang, insbesondere einen Fahrzeugantriebsstrang, mit einem Getriebe und einer mit einem Fluid oder Dampf als Arbeitsmedium angetriebenen Expansionsmaschine, im Einzelnen mit den Merkmalen des Oberbegriffes von Anspruch 1.

Antriebsstränge, in denen sowohl ein Getriebe als auch eine dampfgetriebene Expansionsmaschine angeordnet sind, werden in den Patentschriften US 5 121 607, US 5 241 817 und US 5 195 881 beschrieben. Das Getriebe ist als stufenloses Getriebe (CVT-Getriebe) ausgeführt und weist auf einem sogenannten PTO (Power Take Off) eine Expansionsmaschine auf, welche auch als Kompressor verwendet werden kann, um das Fahrzeug abzubremsen. Die Expansionsmaschine ist über eine Trennkupplung im Getriebe zu- und abschaltbar.

Obwohl die beschriebenen Fahrzeugantriebsstränge sowohl eine Expansionsmaschine als auch ein herkömmliches Getriebe, das beispielsweise zusätzlich einen Retarder aufweisen kann, umfassen, sind die beiden Aggregate räumlich getrennt voneinander angeordnet und über die Abtriebswelle des PTO miteinander verbunden. Die Expansionsmaschine ist vollständig außerhalb des Getriebes vorgesehen. Das bedeutet, dass die Aggregate eigene Versorgungsleitungen benötigen, beispielsweise um Lagerungen im Getriebe und in der Expansionsmaschine zu schmieren. Im Getriebe erhitztes Öl, das als Schmiermedium und zum Schalten beziehungsweise Betätigen von Kupplungen und Bremsen im Getriebe verwendet wird, wird erhitzt und muss über einen Getriebeölkühler gekühlt werden. Ebenso benötigt die Expansionsmaschine Wärmetauscher, um gemäß des vorgesehenen Dampfkraftprozesses dem Arbeitsmedium geeignete Wärme hinzuzufügen, um dieses zu verdampfen, und Wärme zu entziehen, um dieses zu kondensieren. All dies macht die Herstellung und Wartung der vorgeschlagenen Antriebsstränge vergleichsweise teuer und führt zu einem erheblichen Bauraum.

Zum weiteren Stand der Technik wird auf die WO 08/02228 A1, DE 3148208 A1 und die DE 32 45 351 A1 verwiesen. Die Jeweils aus diesen Dokumenten bekannten Merkmale sind im Oberbegriff des Anspruchs 1 zusammengefasst.

Der vorliegenden Erfindung liegt die Aufgabe zugrunde, die bekannten Antriebsstränge derart weiterzuentwickeln, dass die Herstellungskosten, die Betriebskosten und der erforderliche Bauraum deutlich minimiert werden.

Die erfindungsgemäße Aufgabe wird durch einen Antriebsstrang mit den Merkmalen von Anspruch 1 gelöst. In den abhängigen Ansprüchen sind vorteilhafte und besonders zweckmäßige Gestaltungen der Erfindung angegeben.

Der erfindungsgemäße Antriebsstrang, insbesondere Fahrzeugantriebsstrang, beispielsweise eines Personenkraftwagens, Lastkraftwagens oder Schienenfahrzeugs, weist eine Antriebsmaschine zum Einspeisen von Antriebsleistung in den Antriebsstrang auf, um über eine Triebverbindung Antriebsräder oder eine Arbeitsmaschine anzutreiben. Die Antriebsmaschine ist beispielsweise als Verbrennungsmotor, in der Regel als Dieselmotor oder sonstiger Kolbenmotor ausgeführt. Die Arbeitsmaschine kann beispielsweise ein Generator, eine hydrostatische Pumpe oder ein anderes Aggregat sein.

Erfindungsgemäß ist ein Getriebe vorgesehen, das zur Drehzahl- und/oder Drehmomentwandlung in der Triebverbindung zwischen der Antriebsmaschine und den Antriebsrädern beziehungsweise zwischen der Antriebsmaschine und der Arbeitsmaschine vorgesehen ist und eine Primärseite mit einem Getriebeeingang sowie eine Sekundärseite mit einem Getriebeausgang aufweist. Der Getriebeeingang wird in der Regel über eine Getriebeeingangswelle gebildet, und der Getriebeausgang wird in der Regel über eine Getriebeausgangswelle gebildet. Die Antriebsmaschine speist Antriebsleistung in den Getriebeeingang ein, und die Antriebsräder werden beziehungsweise die Arbeitsmaschine wird über den Getriebeausgang angetrieben. Beispielsweise werden die Antriebsräder über ein Differenzialgetriebe in der Triebverbindung hinter dem Getriebeausgang angetrieben.

Ferner ist eine mit einem Fluid oder mit Dampf als Arbeitsmedium angetriebene Expansionsmaschine vorgesehen. Mittels der Expansionsmaschine wird das Arbeitsmedium expandiert und dadurch mechanische Energie beziehungsweise mechanische Leistung gewonnen, welche als zusätzliche Antriebsleistung in den Antriebsstrang zum Antrieb der Antriebsräder oder zum Antrieb der Arbeitsmaschine eingespeist werden kann. Alternativ oder zusätzlich ist es möglich, mittels der Expansionsmaschine ein zusätzliches Aggregat, insbesondere Nebenaggregat des Antriebsstranges, anzutreiben.

Die Erfindung ist dadurch gekennzeichnet, dass die Expansionsmaschine auf der Sekundärseite des Getriebes angeordnet und in das Getriebe integriert ist. Die Anordnung auf der Sekundärseite bewirkt, dass die Antriebswelle der Expansionsmaschine in Abhängigkeit der Drehzahl des Getriebeausganges beziehungsweise bei Verwendung der Expansionsmaschine zur Traktion des Fahrzeugs in Abhängigkeit der Fahrgeschwindigkeit umläuft. Unter der erfindungsgemäßen Integration der Expansionsmaschine in das Getriebe ist zumindest die grundsätzliche Integrationsmöglichkeiten zu verstehen.

Gemäß eines weiterführenden Integrationsgedankens weist die Expansionsmaschine ein Gehäuse auf, welches die Expansionsmaschine vollständig oder zumindest im Wesentlichen vollständig umschließt, ferner eine Antriebswelle, über welche ein Laufrad eine Kurbelwelle, eine Nockenwelle oder dergleichen angetrieben wird, oder durch diese ausgebildet wird. Auf der Antriebswelle ist ein Kopplungselement zur Herstellung einer Triebverbindung vorgesehen. Das Kopplungselement ist fest mit der Antriebswelle verbunden. Die Antriebswelle ragt aus dem Gehäuse der Expansionsmaschine heraus und trägt das Kopplungselement außerhalb des Gehäuses, insbesondere unmittelbar an dem freien axialen Ende oder im Bereich des freien axialen Endes der Antriebswelle. Das Gehäuse der Expansionsmaschine ist derart auf der Sekundärseite außen an einem das Getriebe umschließenden Getriebegehäuse montiert oder ist derart von außen wenigstens teilweise in das Getriebegehäuse eingesteckt montiert, dass die Antriebswelle mit ihrem Kopplungselement in das Getriebegehäuse hineinragt und eine direkte oder eine mittelbare Triebverbindung mit dem Getriebeausgang herstellt. Beispielsweise kann das Kopplungselement als Zahnrad oder Ritzel ausgeführt sein, das mit einem Zahnrad auf dem Getriebeausgang, insbesondere der Getriebeausgangswelle, kämmt, oder welches mittelbar über ein Zwischenzahnrad oder eine Vielzahl von Zwischenzahnrädem mit dem Getriebeausgang beziehungsweise der Getriebeausgangswelle in einer Triebverbindung steht.

Das Kopplungselement kann beispielsweise einteilig mit der Antriebswelle ausgeführt oder mit einer Presspassung auf dieser montiert sein. Auch eine stoffschlüssige Verbindung, beispielsweise durch Verschweißen/Verlöten oder Verkleben kommt in Betracht.

Das Getriebe beziehungsweise dessen Getriebegehäuse ist vorteilhaft der ausgeführt, dass die Antriebswelle mit ihrem Kopplungselement bei fertig montiertem Getriebe in das Getriebe einsteckbar ist und nach dem Einstecken nur noch die Expansionsmaschine am Getriebe beziehungsweise Getriebegehäuse befestigt werden muss. Wenn das Getriebegehäuse beispielsweise einen Grundkörper in Form einer Wanne und einen Deckel aufweist, der von oben auf den Grundkörper aufgesetzt und an diesem befestigt wird, so können zunächst Grundkörper und Deckel montiert werden, bevor die Antriebswelle der Expansionsmaschine mit ihrem Kopplungselement insbesondere seitlich in das Getriebe eingesteckt wird.

Prinzipiell ist es auch möglich, das Kopplungselement zunächst im Getriebe zu lagern und anschließend bei fertig montiertem Getriebe eine drehfeste Verbindung mit der Antriebswelle durch Einschieben und Herstellen einer Steckverbindung herzustellen.

Gemäß dem grundsälzlichen erfindungsgemäßen Integrationsgedanken weist das Getriebe einen Wärmetauscher auf, mittels welchem ein Getriebeöl zur Schmierung des Getriebes und/oder zur Betätigung von Kupplungen oder Bremsen innerhalb des Getriebes gekühlt wird, und das Arbeitsmedium der Expansionsmaschine wird derart durch diesen Wärmetauscher geleitet, dass in dem Wärmetauscher Wärme aus dem Arbeitsmedium abgeleitet wird, um das Arbeitsmedium teilweise oder vollständig zu kondensieren, oder Wärme auf das Arbeitsmedium der Expansionsmaschine übertragen wird, um dieses zu erhitzen, insbesondere für eine nachfolgende Verdampfung in einem Verdampfer vorzuwärmen. Die Kupplungen oder Bremsen innerhalb des Getriebes dienen in der Regel dazu, verschiedene Gangstufen im Getriebe einzulegen. So können die Kupplungen beispielsweise als Lamellenkupplungen ausgeführt sein. Alternativ oder zusätzlich kann auch eine mit Getriebeöl betriebene hydrodynamische Kupplung und/oder ein mit Getriebeöl betriebener hydrodynamischer Retarder und/oder ein mit Getriebeöl betriebener hydrodynamischer Wandler im Getriebe vorgesehen sein, welche/welcher Wärme in das Getriebeöl einbringt, die in dem Wärmetauscher (Getriebeölkühler) an die Umgebung, an einen Kühlmediumkreislauf, insbesondere Fahrzeugkühlkreislauf, und/oder das Arbeitsmedium der Expansionsmaschine abgegeben wird.

Besonders vorteilhaft ist die Antriebswelle der Expansionsmaschine gegenüber dem Getriebeausgang, insbesondere gegenüber der Getriebeausgangswelle, ins Schnelle übersetzt, insbesondere mittels eines Stimradsatzes. Alternativ oder zusätzlich kann in der Triebverbindung zwischen der Antriebwelle der Expansionsmaschine und dem Getriebeausgang ein schaltbares Stufengetriebe vorgesehen sein, um die Übersetzung zwischen der Antriebswelle der Expansionsmaschine und dem Getriebeausgang wahlweise zu variieren. Selbstverständlich kommt auch ein stufenloses Getriebe in Betracht, um die Übersetzung entsprechend zu variieren.

Um die Montage der Expansionsmaschine am Getriebe beziehungsweise am Getriebegehäuse zu vereinfachen, kann auf der Antriebswelle der Expansionsmaschine und/oder am Gehäuse der Expansionsmaschine eine Zentriereinrichtung vorgesehen sein, welche insbesondere in Form einer Zentrierscheibe ausgeführt ist. Beispielsweise weist die Zentrierscheibe oder ein entsprechender Zentrierbund eine konische Oberfläche (radial außen oder radial innen) auf, der in eine entsprechende gegengleich gestaltete konische Oberfläche eingreift beziehungsweise an dieser zum Anliegen kommt, wenn die Expansionsmaschine auf das Gehäuse des Getriebes aufgesetzt wird beziehungsweise in das Getriebe eingesteckt wird und befestigt wird.

Die Expansionsmaschine und das Getriebe können eine gemeinsame Schmierölversorgung aufweisen. Beispielsweise ist ein einziger Schmierölsumpf oder mehrere Schmierölsümpfe innerhalb des Getriebegehäuses vorgesehen, der/die zugleich als Schmierölsumpf für die zu schmierenden Bauteile der Expansionsmaschine dient/dienen. Die Expansionsmaschine kann somit selbst frei von einem Schmierölsumpf sein.

Gemäß einer Ausführungsform kann durch die Antriebswelle der Expansionsmaschine wenigstens ein weiteres Aggregat angetrieben werden, beispielsweise eine Pumpe, insbesondere Wasserpumpe, Kraftstoffpumpe und/oder Ölpumpe. Alternativ oder zusätzlich kann auch ein hydrodynamischer Retarder über die Antriebswelle der Expansionsmaschine angetrieben werden. Besonders vorteilhaft wird das durch die Expansionsmaschine angetriebene Aggregat beziehungsweise der hydrodynamische Retarder durch die Antriebswelle der Expansionsmaschine getragen.

Die Antriebswelle der Expansionsmaschine ist zusammen mit dem darauf vorgesehenen Kopplungselement, beispielsweise einem Ritzel oder einer Riemenscheibe, vorteilhaft als Einsteckwelle ausgeführt, die mit ihrem freien Ende, auf welchem das Kopplungselement angeordnet ist, in ein im Getriebe vorhandenes Lager, insbesondere bei schon zusammengebautem Getriebe, eingesteckt wird. Hierzu kann die Antriebswelle in einen Lagerinnenring eingesteckt werden, oder selbst einen Lagerinnenring tragen und gemeinsam mit dem Lagerinnenring in einen Lageraußenring eingesteckt werden.

Die Erfindung soll nachfolgend anhand eines Ausführungsbeispiels exemplarisch beschrieben werden, wobei einzelne Merkmale des Ausführungsbeispiels getrennt von den übrigen dargestellten Merkmalen ausgeführt werden können, um zu einer erfindungsgemäßen Lösung zu gelangen.

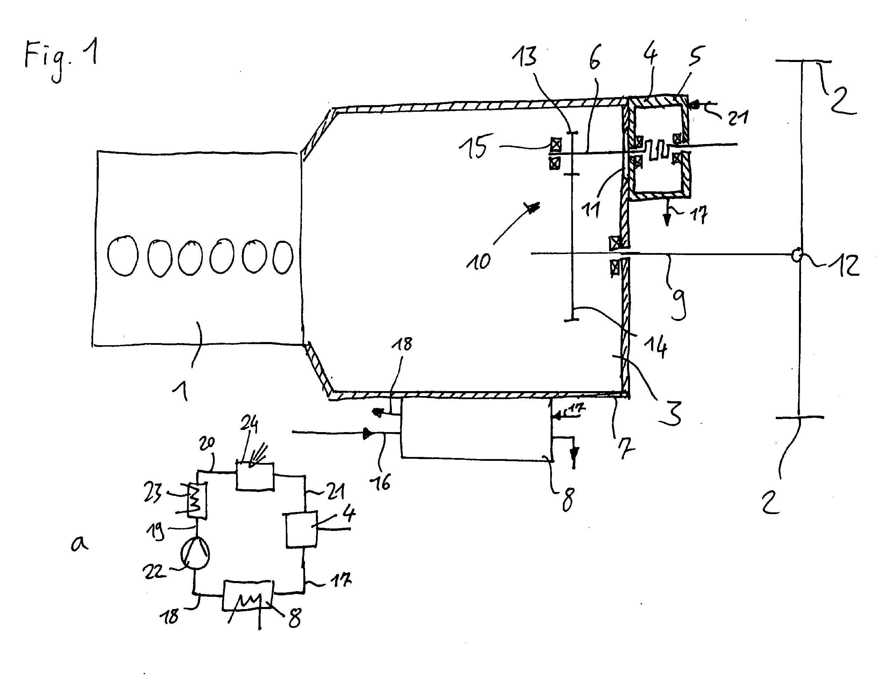

In der Figur 1 ist sehr schematisch eine mögliche erfindungsgemäße Ausgestaltung eines Antriebsstranges gezeigt, mit einer Antriebsmaschine 1, die über ein Getriebe 3, mit einer Getriebeausgangswelle 9 und über ein Differenzialgetriebe 12 Antriebsräder 2 antreibt. Die gezeigte Ausführungsform bezieht sich dabei auf ein Straßenfahrzeug. Bei Ausführung als Schienenfahrzeug kommt anstelle des Differenzialgetriebes auch eines oder mehrere Radsatzgetriebe in Betracht, um die Antriebsleistung vom Getriebeausgang auf die angetriebenen Räder zu übertragen. Andere Ausführungsformen sind denkbar.

Auf der Sekundärseite des Getriebes 3 ist eine Expansionsmaschine 4, vorliegend als dampfgetriebene Expansionsmaschine (Dampfexpander) ausgeführt, vorgesehen. Wie angedeutet, ist die Expansionsmaschine 4 als Kolbenmaschine ausgeführt. Jedoch kommen auch andere Ausführungsformen, beispielsweise eine Schraubenmaschine oder eine Turbine, insbesondere Dampfturbine in Betracht. Die Expansionsmaschine 4 dient in dem gezeigten Ausführungsbeispiel ebenso dazu, Antriebsleistung auf die Antriebsräder 2 des Fahrzeugs zu übertragen, somit zur Traktion des Fahrzeugs beizutragen. Zusätzlich könnte beispielsweise auf dem gezeigten freien Ende, das heißt dem dem Getriebe 3 abgewandten Ende der Antriebswelle 6 der Expansionsmaschine 4 ein weiteres Aggregat vorgesehen sein, das durch die Expansionsmaschine 4 angetrieben wird, beispielsweise eine Wasserpumpe, Brennstoffpumpe oder Ölpumpe.

Die Expansionsmaschine 4 ist derart auf der Sekundärseite am Getriebegehäuse 7 des Getriebes 3 montiert, dass die Antriebswelle 6 mit ihrem Kopplungselement, vorliegend in Form eines Ritzels 13, in das Getriebegehäuse 7 hineinragt und dort in einer Triebverbindung mit einem von der Getriebeabtriebswelle 9 getragenen Außenzahnrad 14 steht. Anstelle des gezeigten Stimradsatzes 10, der durch das Außenzahnrad 14 und das Ritzel 13 gebildet wird, kommt auch eine andere Ausführungsform einer Triebverbindung in Betracht, beispielsweise eine Verbindung über einen Keilriemen mit zwei Keilriemenscheiben oder Zahnriemen mit zwei Zahnriemenscheiben.

Die Antriebswelle 6 des Getriebes kann bei fertig montiertem Getriebe 3, das heißt bei weitgehend oder vollständig geschlossenem Getriebegehäuse 7, in das Getriebegehäuse 7 eingesteckt werden und in das dort gezeigte Lager 15, das nach der Montage der Expansionsmaschine 4 das axial äußere, freie Ende der Antriebswelle 6 trägt, eingefädelt werden. Somit ist es möglich, die Expansionsmaschine 4 getrennt von dem Getriebe 3 herzustellen und in vormontiertem Zustand am fertigmontierten Getriebe 3 anzuschließen beziehungsweise zu befestigen. Um eine Zentrierung der Expansionsmaschine 4 beziehungsweise deren Antriebswelle 6 gegenüber dem Getriebe 3 beziehungsweise dem Lager 15 zu erreichen, weist das Gehäuse 5 der Expansionsmaschine und/oder die Antriebswelle 6 der Expansionsmaschine 4 eine Zentrierscheibe 11 auf, die in eine entsprechend gegengleich gestaltete Öffnung im Getriebegehäuse 7 zentrierend eingreift.

In der gezeigten Ausführungsform ist außen am Getriebegehäuse 7 ein Wärmetauscher 8 zur Ableitung von Wärme aus dem Getriebe 3 beziehungsweise aus dem im Getriebe 3 verwendeten Getriebeöl vorgesehen. Alternativ oder zusätzlich könnte dieser Wärmetauscher 8 teilweise oder vollständig in das Getriebe 3 integriert werden, das heißt teilweise oder vollständig durch das Getriebegehäuse 7 umschlossen werden. Neben der Kühlung des Getriebeöls, beispielsweise indem Wärme aus dem Getriebeöl an den angedeuteten Fahrzeugkühlkreislauf 16 abgeleitet wird, hat der Wärmetauscher 8 die Aufgabe, das Arbeitsmedium der Expansionsmaschine 4, insbesondere Wasser oder ein Wassergemisch, zu kondensieren, siehe die angedeuteten arbeitsmediumführenden Leitungen 17, 18 der Expansionsmaschine 4. In der Einzelheit a sind diese Leitungen 17, 18 nochmals schematisch dargestellt, sowie weitere Leitungen 19 bis 21, welche das Arbeitsmedium der Expansionsmaschine 4 führen. Wie man erkennt, strömt das Arbeitsmedium aus der Leitung 18 durch eine Speisewasserpumpe 22, die Leitung 19 in einen Wärmetauscher 23, die Leitung 20, in einen Dampferzeuger 24, die Leitung 21, in die Expansionsmaschine 4, die Leitung 17 und wieder in den Wärmetauscher 8, um den Wasserdampfkreislauf als Arbeitsmediumkreislauf der Expansionsmaschine 4 auszubilden. Im Wärmetauscher 8 wird das Arbeitsmedium kondensiert, im Wärmetauscher 23 vorgewärmt, im Dampferzeuger 24 in den dampfförmigen Zustand gebracht und gegebenenfalls überhitzt und in der Expansionsmaschine 4 dann wieder expandiert. In der Regel wird, obwohl dies nicht dargestellt ist, zusätzlich ein Vorratsbehälter in Strömungsrichtung vor der Speisewasserpumpe 22 vorgesehen sein.

Der Wärmetauscher 23 kann gemäß einer Ausführungsform auch eingespart werden, oder gemäß einer alternativen Ausführungsform kann der Wärmetauscher 8 des Getriebes 3 anstelle des Wärmetauschers 23 im Arbeitsmediumkreislauf der Expansionsmaschine 4 eingebunden werden. Somit könnte dann Wärme aus dem Getriebe 3 beziehungsweise dem Getriebeöl in den Arbeitsmediumkreislauf der Expansionsmaschine 4 eingeleitet werden, um das Arbeitsmedium vorzuwärmen.

## Patentansprüche

1. Antriebsstrang, insbesondere Fahrzeugantriebsstrang
1.1 mit einer Antriebsmaschine (1) zum Einspeisen von Antriebsleistung in den Antriebsstrang, um über eine Triebverbindung Antriebsräder (2) oder eine Arbeitsmaschine anzutreiben;
1.2 mit einem Getriebe (3), das zur Drehzahl und/oder Drehmomentwandlung in der Triebverbindung zwischen der Antriebsmaschine (1) und den Antriebsrädern (2) oder der Arbeitsmaschine vorgesehen ist und eine Primärseite mit einem Getriebeeingang sowie eine Sekundärseite mit einem Getriebeausgang aufweist, wobei die Antriebsmaschine (1) Antriebsleistung in den Getriebeeingang einspeist und die Antriebsräder (2) oder die Arbeitsmaschine über den Getriebeausgang angetrieben werden/wird;
1.3 mit einer mit einem Fluid oder Dampf als Arbeitsmedium angetriebenen Expansionsmaschine (4), mittels welcher zusätzlich Antriebsleistung in den Antriebsstrang zum Antrieb der Antriebsräder (2) oder der Arbeitsmaschine einspeisbar ist, und/oder welche ein zusätzliches Aggregat antreibt; **dadurch gekennzeichnet, dass**
1.4 die Expansionsmaschine (4) gemäß dem folgenden Merkmal in das Getriebe (3) auf dessen Sekundärseite integriert ist:
- das Getriebe (3) weist einen Wärmetauscher (8) auf, mittels welchem ein Getriebeöl zur Schmierung des Getriebes (3) und/oder Betätigung von Kupplungen oder Bremsen innerhalb des Getriebes (3) durch Ableiten von Wärme an einen Fahrzengkühlkreislauf gekühlt wird, wobei zusätzlich das Arbeitsmedium der Expansionsmaschine (4) derart durch den Wärmetauscher (8) geleitet wird, dass in diesem Wärme aus dem Arbeitsmedium abgeführt wird, um das Arbeitsmedium teilweise oder vollständig zu kondensieren.

2. Antriebsstrang gemäß Anspruch 1, **dadurch gekennzeichnet, dass** die Antriebswelle (6) der Expansionsmaschine (4) gegenüber dem Getriebeausgang, welcher durch eine Getriebeausgangswelle (9) gebildet wird, ins Schnelle übersetzt ist, insbesondere mittels eines Stimradsatzes

3. Antriebsstrang gemäß Anspruch 1, **dadurch gekennzeichnet, dass** in der Triebverbindung zwischen der Antriebswelle (6) der Expansionsmaschine (4) und dem Getriebeausgang ein schaltbares Stufengetriebe oder stufenloses Getriebe vorgesehen ist, um die Übersetzung zwischen der Antriebswelle (6) und dem Getriebeausgang wahlweise zu variieren.

4. Antriebsstrang gemäß einem der Ansprüche 1 bis 3, **dadurch gekennzeichnet, dass** auf der Abtriebswelle (6) der Expansionsmaschine (4) und/oder am Gehäuse (5) der Expansionsmaschine (4) eine Zentriereinrichtung, insbesondere in Form einer Zentrierscheibe (11) vorgesehen ist, um die Expansionsmaschine (4) und insbesondere deren Antriebswelle (6) bei der Montage am Getriebegehäuse (7) zu zentrieren.

5. Antriebsstrang gemäß einem der Ansprüche 1 bis 4, **dadurch gekennzeichnet, dass** die Expansionsmaschine (4) und das Getriebe (3) eine gemeinsame Schmierölversorgung aufweisen, welche insbesondere wenigstens einen oder einen einzigen Schmierölsumpf innerhalb des Getriebegehäuses (7) aufweist.

6. Antriebsstrang gemäß einem der Ansprüche 1 bis 5, **dadurch gekennzeichnet, dass** die Antriebswelle (6) der Expansionsmaschine (4) ein weiteres drehbar angetriebenes Aggregat, insbesondere eine Pumpe, Wasserpumpe, Kraftstoffpumpe oder Ölpumpe trägt, oder einen hydrodynamischen Retarder trägt.

7. Antriebsstrang gemäß einem der Ansprüche 1 bis 6, **dadurch gekennzeichnet, dass** die Antriebswelle (6) mit ihrem Kopplungselement bei teilweise oder vollständig montiertem Getriebe (3) und insbesondere bei teilweise oder vollständig montierter Expansionsmaschine (4) in das Getriebe (3), insbesondere ein dort vorgesehenes Lager (15), einsteckbar ist.

## Claims

1. A drive train, especially a vehicle drive train,
1.1 comprising an engine (1) for supplying drive power to the drive train in order to drive driving wheels (2) or a work machine via a drive connection;
1.2 comprising a transmission (3) which is provided for speed and/or torque conversion in the drive connection between the engine (1) and the driving wheels (2) or the work machine and comprises a primary side with a transmission input and a secondary side with a transmission output, with the engine (1) supplying driving power to the transmission input and the driving wheels (2) or the work machine is driven via the transmission output;
1.3 comprising an expander (4) which is driven with a fluid or steam as a working medium and by means of which drive power can be supplied additionally to the drive train for driving the driving wheels (2) or the work machine, and/or which drives an additional unit;
**characterized in that**
1.4 the expander (4) is integrated according to the following feature in the transmission (3) on its secondary side:
The transmission (3) comprises a heat exchanger (8) by means of which a transmission oil for lubricating the transmission (3) and/or for actuating clutches or brakes within the transmission (3) is cooled by dissipating heat to a vehicle cooling circuit (16), with the working medium of the expander (4) being additionally guided in such a way through said heat exchanger (8) that heat is dissipated from the working medium in the same in order to condense the working medium partly or in full.

2. The drive train according to claim 1, **characterized in that** the drive shaft (6) of the expander (4) is subjected to speed-increasing ratio in relation to the transmission output which is formed by a transmission output shaft (9), especially by means of a spur gear drive (10).

3. The drive train according to claim 1, **characterized in that** a shiftable multistep transmission or a continuously variable transmission can be provided in the drive connection between the drive shaft (6) of the expander (4) and the transmission output in order to optionally vary the gear ratio between the drive shaft (6) and the transmission.

4. The drive train according to one of the claims 1 to 3, **characterized in that** a centering device, especially in the shape of a centering disk (11), is provided on the output shaft (6) of the expander (4) and/or on the housing (5) of the expander (4) in order to center the expander (4) and especially its drive shaft (6) during mounting on the transmission housing (7).

5. The drive train according to one of the claims 1 to 4, **characterized in that** the expander (4) and the transmission (3) have a common lubrication oil supply which especially comprises one or only one single lubrication oil sump within the transmission housing (7).

6. The drive train according to one of the claims 1 to 5, **characterized in that** the drive shaft (6) of the expander (4) carries a further rotatably driven unit, especially a pump, water pump, fuel pump or oil pump, or carries a hydrodynamic retarder.

7. The drive train according to one of the claims 1 to 6, **characterized in that** the drive shaft (6) is insertable with its coupling element into the transmission (3), especially into a bearing (15) provided there, when the transmission is partly or fully mounted and especially when the expander (4) is partly or fully mounted.

## Revendications

1. Train d'entraînement, en particulier train d'entraînement de véhicule
1.1 disposant d'un mécanisme d'entraînement (1) permettant l'alimentation de paissance absorbée du train d'entraînement, pour entraîner des roues d'entraînement (2) ou une machine de travail par l'intermédiaire d'une liaison motrice;
1.2 avec une transmission (3), prévue dans la liaison motrice entre le mécanisme d'entraînement (1) et les roues d'entraînement (2) ou la machine de travail pour produire la vitesse de rotation et/ou convertir le couple de rotation et présentant un côté primaire disposant d'une entrée de transmission de même qu'un côté secondaire disposant d'une sortie de transmission, dans lequel le mécanisme d'entraînement (1) alimente la puissance absorbée dans l'entrée de transmission et les roues d'entraînement (2) sont entraînées ou la machine de travail est entraînée par le biais de la sortie de transmission;
1.3 avec une machine à expansion (4) entrainée par un fluide ou vapeur, grâce laquelle supplémentairement une puissance d'entraînement peut être alimentée dans le train d'entraînement pour entraîner les roues d'entraînement (2) ou la machine de travail, et/ou laquelle entraîne une unité supplémentaire;
**caractérisé en ce que**
1.4 la machine à expansion (4) est intégrée dans la transmission (3) sur le côté secondaire de celle-ci selon les caractéristiques suivantes:
la transmission (3) présente un échangeur thermique (8) par l'intermédiaire duquel on refroidit une huile de transmission pour lubrifier la transmission (3) et/ou actionner des embrayages ou des freins à l'intérieur de la transmission (3) par conduction de la chaleur vers un circuit de refroidissement de véhicule (16), où supplémentairement le fluide de travail de la machine à expansion (4) est guidé à travers l'échangeur thermique (8) de telle sorte que l'on conduit de chaleur du fluide de travail dans celui-ci pour condenser le fluide de travail partiellement ou complètement.

2. Train d'entraînement selon la revendication 1, **caractérisé en ce que** l'arbre d'entraînement (6) de la machine à expansion (4) envers à la sortie de transmission, constituée par un arbre de sortie de transmission (9) produit un rapport par vitesse en particulier par le biais d'un set des roues dentées cylindriques.

3. Train d'entraînement selon la revendication 1, **caractérisé en ce qu'**une boîte de vitesses à changement de plage commutable ou bien une transmission continue est prévue dans la liaison motrice entre l'arbre d'entraînement (6) de la machine à expansion (4) et la sortie de transmission, pour jouer de manière sélective sur le rapport de transmission entre l'arbre d'entraînement (6) et la sortie de transmission.

4. Train d'entraînement selon l'une quelconque des revendications 1 à 3, **caractérisé en ce qu'**un dispositif de centrage, en particulier sous forme de rondelle de centrage (11) est prévu sur l'arbre de sortie (6) de la machine à expansion (4) et/ou au boîtier (5) de la machine à expansion (4) pour centrer la machine à expansion (4) et en particulier son arbre d'entraînement (6) lors du montage au niveau à la boîte de vitesses (7).

5. Train d'entraînement selon l'une quelconque des revendications 1 à 4, **caractérisé en ce que** la machine à expansion (4) et la transmission (3) présentent une alimentation en huile de lubrification commune comprenant en particulier au moins un ou un seul carter d'huile de lubrification à l'intérieur de la boîte de vitesses (7).

6. Train d'entraînement selon l'une quelconque des revendications 1 à 5, **caractérisé en ce que** l'arbre d'entraînement (6) de la machine à expansion (4) porte une autre unité entraînée de manière rotative, en particulier une pompe, une pompe à eau, une pompe à carburant ou une pompe à huile, ou porte un retardateur hydrodynamique.

7. Train d'entraînement selon l'une quelconque des revendications 1 à 6, **caractérisé en ce que** l'arbre d'entraînement (6) peut être introduit avec son élément d'embrayage, en cas dans lequel la transmission (3) est montée partiellement ou complètement et en particulier en cas dans lequel la machine à expansion (4) est montée partiellement ou complètement, dans la transmission (3), en particulier dans un pallier (15) prévu à cet endroit.
